# EUROPEAN PATENT SPECIFICATION

(11) **EP 2 431 264 B1**
(45) Date of publication and mention of the grant of the patent: **29.05.2013**
(21) Application number: 11181367.1
(22) Date of filing: 15.09.2011
(51) Int. Cl.: B62J 1/12, B62K 19/46

(54) **Saddle ride-type vehicle**
Grätschsitz-Fahrzeug
Véhicule du type monté à califourchon

(30) Priority: 17.09.2010 JP 2010210094
(43) Date of publication of application: 21.03.2012
(73) Proprietor: Honda Motor Co., Ltd., Tokyo 107-8556 (JP)
(72) Inventor: Kawasaki, Hidekuni, Saitama, 351-0193 (JP); Torikai, Shuichi, Kanagawa, 243-0035 (JP)
(74) Representative: Beder, Jens

(56) References cited:
- EP-A1- 1 939 078
- EP-A2- 1 961 648
- JP-A- 2008 279 961
- JP-A- 2010 083 357

## Description

The present invention relates to a saddle ride-type vehicle, and particularly to a saddle ride-type vehicle having a straddling space formed in front of a seat.

### [Background Art]

Vehicles such as motorcycles are termed as saddle ride-type vehicles, because the rider is seated by straddling the seat. As disclosed in Japanese Patent Application Publication No. 2008-279961, for example, the saddle ride-type vehicles include a vehicle termed as a low-floor, saddle ride-type vehicle (a scooter-type motorcycle) because of having lower-floor portions on which the rider can rest his/her feet.

A structure disclosed in Japanese Patent Application Publication No. 2008-279961 has, for example, a straddling space between a head pipe and a seat on which the rider is seated, as well as a storage box which is placed under a front-side portion of the seat. In addition, in the structure, the opening and closing of the storage box is achieved by opening and closing the entire seat widely by use of a hinge mechanism placed under the straddling space.

The saddle ride-type vehicle disclosed in Patent Japanese Patent Application Publication No. 2008-279961, however, has a problem that the securing of the straddling space, that is to say, the securing of easy mount and dismount is incompatible with the securing of the storage capacity, because the saddle ride-type vehicle has a structure in which the storage box is placed adjacent to the straddling space. Particularly, the securing of the straddling space is a serious matter in a case where: the saddle ride-type vehicle has a structure in which the engine is placed in a front-side portion of the vehicle body frame; and the engine is large in size.
Under this situation, in a particular case where the seat bottom plate is structured to concurrently work as the lid member of the storage box, the structure poses a problem that the straddling space is narrowed down due to the thickness of urethane foam which is a cushion material provided on the seat bottom plate.

This comes from the seat manufacturing method which has difficulty in making an area, where no urethane foam is formed, on the seat bottom plate and accordingly cannot avoid a structure in which the urethane foam is provided up to a front center portion of the seat. In other words, the urethane foam is actually provided even to the front center portion of the seat which faces the straddling space.
This entails a problem that bulge of the urethane foam formed on the seat bottom plate narrow down the straddling space and accordingly worsen the straddling comfort.
A saddle ride-type vehicle having the features of the preamble of claim 1 is known from EP 1 961 648 A and EP 1 939 078 A1. Furthermore from JP 2010-083357 A, a saddle ride-type vehicle with a vehicle body frame, a seat and a storage box being situated under the seat is known. A hinge mechanism is provided for supporting the seat turnably with respect to the vehicle body frame. Furthermore, the known saddle ride-type vehicle comprises a step floor and a tunnel portion with a straddling portion being formed in an area over the floor tunnel portion which is based in an area in front of and lower than the seat. The known vehicle also comprises a lid member wherein the lid member is separated from the seat bottom plate and covers the storage box. The lid member is connected by means of seat side hinge member for being turnable about a rotary shaft of the hinge mechanism.

The present invention has been made in view of the foregoing problems. An object of the present invention is to provide a saddle ride-type vehicle having the storage box under the seat on which the rider is seated, capable of securing a storage capacity of the storage box, capable of securing a sufficiently large straddling space, and offering an excellent straddling comfort.

To achieve the above-described object, a first aspect of the present invention is a saddle ride-type vehicle including: a vehicle body frame; a seat having a seat skin, a cushion material and a seat bottom plate; a storage box situated under the seat; a hinge mechanism for pivotally supporting the seat turnably with respect to the vehicle body frame; a step floor on which a rider rests his feet, respectively; and a floor tunnel portion placed in an area in front of and lower than the seat, a straddling portion being formed in an area over the floor tunnel portion and in front of the seat, the saddle ride-type vehicle characterized in that a lid member is provided over the storage box, the lid member being a body separated from the seat bottom plate, a seat-side hinge member is connected to a front portion of the lid member, the seat-side hinge member being configured to turn about a rotary shaft of the hinge mechanism, and the seat bottom plate is connected to a rear portion of the lid member. The lid member covers the entirety of an opening portion of the storage box, and includes a seal member brought into contact with a full circumference of an edge portion of the opening portion.

A second aspect of the present invention, in addition to the configuration of a first aspect of the present invention, is characterized in that the lid member is formed substantially in such a hemispherical shape as to bulge upward from a vehicle body and cover the storage box.

A third aspect of the present invention, in addition to the configuration of any one of the first to second aspects of the present invention, is characterized in that a hemispherical surface portion, which is substantially in a hemispherical shape, is provided in a vehicle front-side portion of the seat bottom plate, and front left and right portions are formed by providing a curved-surface cut-away portion in the hemispherical surface portion, the curved-surface cut-away portion being obtained by cutting away a vehicle front-side center portion from the hemispherical surface portion.

A fourth aspect of the present invention, in addition to the configuration of the third aspect of the present invention, is characterized in that, in the seat bottom plate, its portion where the hemispherical surface portion overlaps the lid member in a plan view is formed using a smoothly curved surface, and its rear portion, which is situated closer to a rear of the vehicle than the lid member is, includes a rib portion having protrusions and depressions in a thickness direction of the rear portion.

A fifth aspect of the present invention, in addition to the configuration of the any one of the first to fourth aspects of the present invention, is characterized in that the seat-side hinge member and the lid member are directly connected together by use of a fastening member, and the seat bottom plate and the lid member are elastically connected together by use of an elastic fastening member.

According to the first aspect of the present invention, a structure for closing the upper portion of the storage box can be manufactured independently of a step of forming urethane foam on the upper surface of the seat bottom plate while manufacturing the seat, because the structure includes the lid member formed as a member separated from the seat bottom plate. Since this independent manufacturing can be performed, the lid member over the storage box is free from a manufacturing method in which the seat bottom plate has to be overlaid with the urethane foam. Accordingly, the lid member can have a structure including no urethane foam, and it is possible to reduce the extension of the lid member to the straddling space.
In addition, the lid member as a member separated from seat bottom plate is given greater latitude in shape and design, and accordingly can be formed using a thinner but more rigid material and shape. For this reason, the straddling space can be secured easily. Furthermore, the storage box can be opened and closed easily by opening and closing the seat, because the hinge mechanism, the lid member and the seat bottom plate are integrally connected together and the tight closure of the storage box is ensured in a satisfactory condition because the lid member covers all the opening portion of the storage box and the entire opening portion is sealed with the seal member.

According to the second aspect of the present invention, the lid member is increased in strength and has a thin but highly rigid structure, because the lid member is formed substantially in a hemispherical shape. Accordingly, since the lid member is made thin, the straddling space as well as the capacity of the storage box can be secured even in the case where the lid member is structured to bulge upward from the vehicle body.

According to the third aspect of the present invention, the straddling space can be enlarged because the seat bottom plate is formed to lack a portion which would otherwise be opposed to the straddling space. In addition, the riding comfort can be enhanced because the seat front-side portion of the seat bottom plate is formed in a hemispherical shape and the cushion material can be provided up to its left and right portions which touch the inner sides of the two thighs.

According to the fourth aspect of the present invention, the thickness of the seat bottom plate is substantially made thin and accordingly the height of the seat is suppressed to the utmost extent, because the hemispherical surface portion of the seat bottom plate, which is situated close to the straddling space, is formed to have the smoothly curved surface. Furthermore, the weight of the seat bottom plate can be reduced and the rigidity of the seat is improved, because the seat bottom plate has the structure in which the rib portion is provided to an area on which the rider is seated.

According to the fifth aspect of the present invention, an operation of opening and closing the seat exhibits an excellent opening and closing operability because: the lid member is securely supported to the vehicle body frame by the seat-side hinge member; and the rigidity is secured for the opening and closing of the seat. In addition, vibrations are prevented from being transmitted from the vehicle body to the seat and accordingly the riding comfort is enhanced, because the vehicle body frame and the seat are fixed together by use of the elastic fastening members.
Fig. 1 is a left side view of an embodiment of a saddle ride-type vehicle of the present invention.
Fig. 2 is a schematic end face view of a part of the saddle ride-type vehicle of the present invention, the part being situated under a straddling space, taken along the C-C line of Fig. 1, and viewed from the front of the vehicle.
Fig. 3 is a schematic side view of a main part of the saddle ride-type vehicle shown in Fig. 1, from which vehicle body cover members are detached.
Fig. 4 is a left side view showing a lid member of the embodiment of the present invention.
Fig. 5 is a front view of the lid member viewed in a direction indicated by arrow A in Fig. 4 (from the front of the vehicle).
Fig. 6 is a bottom view of the lid member viewed in a direction indicated by arrow B in Fig. 4 (from the bottom of the vehicle).
Fig. 7 is a left side view showing a seat bottom plate of the embodiment of the present invention.
Fig. 8 is a front view of the seat bottom plate shown in Fig. 7, which is viewed from the front of the vehicle.
Fig. 9 is a plan view of the seat bottom plate shown in Fig. 7, which is viewed from above the vehicle.
Fig. 10 is a left side view showing a seat-side hinge member of the embodiment of the present invention.
Fig. 11 is a front view of the seat-side hinge member shown in Fig. 10, which is viewed from the front of the vehicle.
Fig. 12 is a plan view of the seat-side hinge member shown in Fig. 10, which is viewed from above the vehicle.
Fig. 13 is a perspective view of the feature part from which the vehicle body cover members and the urethane foam of the seat are removed, the perspective view aiming at showing how a seat is attached to the saddle ride-type vehicle shown in Fig. 1.
Fig. 14 is a schematic cross-sectional view of a part of the saddle ride-type vehicle shown in Fig. 1, which includes an area where fastening members are placed, and which extends in a front-rear direction of the vehicle, the cross-sectional view aiming at showing how the seat-side hinge member and the lid member are connected together.
Fig. 15 is a schematic cross-sectional view of the part of the saddle ride-type vehicle shown in Fig. 1, which includes an area where elastic fastening members are placed, and which extends in the front-rear direction of the vehicle, the cross-sectional view aiming at showing how the lid member and the seat bottom plate are connected together.
Fig. 16 is a magnified cross-sectional view for explaining one elastic fastening member shown in Fig. 15.

Descriptions will be provided for an embodiment of the present invention on the basis of the attached drawings.
It should be noted that each drawing is requested to be viewed in a direction which makes reference numerals on the drawing legible. In addition, abbreviations Fr, Rr, U, D, R and L written in each drawing denote frontward, rearward, upward, downward, rightward and leftward of the vehicle of the embodiment, respectively.

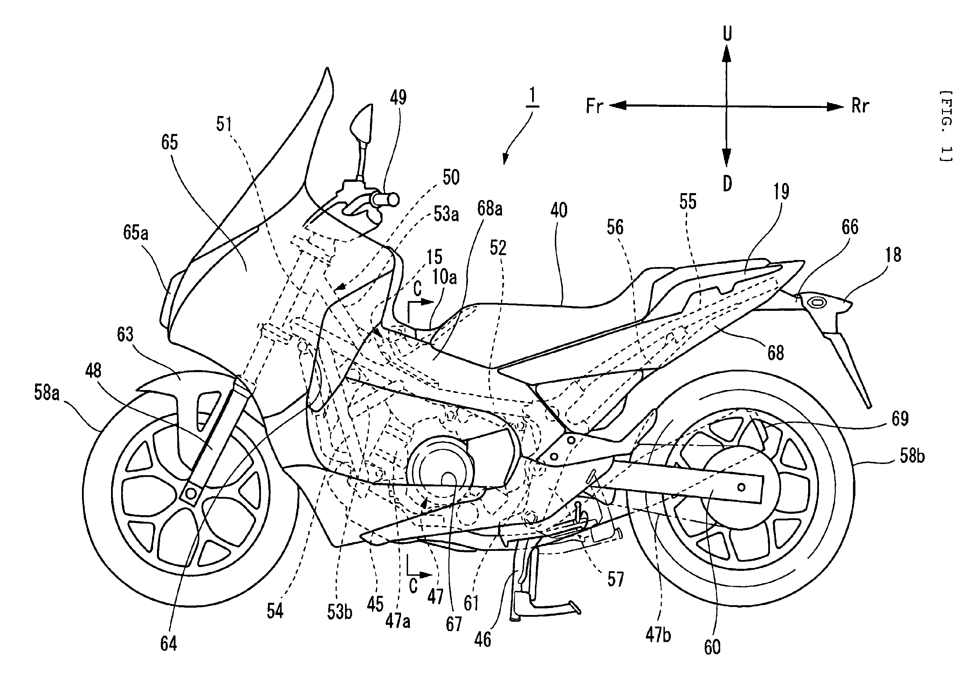

Fig. 1 is a left side view of a low-floor, saddle ride-type vehicle of an embodiment of the present invention. A low-floor, saddle ride-type motorcycle 1 as a low-floor, saddle ride-type vehicle has a vehicle body frame 50 which includes: main tubes 52 extending rearward and slightly downward from a lower-end portion of a head pipe 51 to a vehicle body center; upper reinforcement tubes 53a extending obliquely downward and rearward from an upper-end portion of the head pipe 51, and connected to the respective main tubes 52; down tubes 54 extending obliquely downward and rearward from front portions of the main tubes 52, respectively; lower reinforcement tubes 53b extending obliquely between the down tubes 54 and the main tubes 52, and thus connecting the down tubes 54 and the main tubes 52 together, respectively; seat rails 55 extending slightly upward from rear ends of the main tubes 52 toward the rear of the vehicle, respectively; and pivot plates 57 connected to the main tubes 52 and the seat rails 55, extending in a vertical direction of the vehicle, and supporting a pivot shaft 61, sub-frames 56 and the like, respectively.

In addition, the low-floor, saddle ride-type motorcycle 1 includes: a front wheel 58a rotatably provided to lower ends of front forks 48 which are revolvably attached to the head pipe 51; a handlebar 49 provided to an upper end of the front forks 48; a power unit 47 attached to lower portions of the main tubes 52, respectively; a rear wheel 58b rotatably provided to a rear end of the power unit 47, or in the rear of the power unit 47, with assistance of a swing arm 60; and a rear cushion, and the like.

Furthermore, an external structure of the low-floor, saddle ride-type motorcycle 1 includes: a front cowl 65 surrounding a front portion of the head pipe 51; seal legs 64 surrounding a rear portion of the head pipe 51; step floors 67 continuing to the seal legs 64, and extending almost horizontally; side covers 68 extending from the step floors 67 toward the rear of the vehicle, and covering the respective seat rails 55; and a seat 40 placed on the side covers 68, supported by the seat rails 55, and extending toward the front and rear of the vehicle.

Moreover, a font fender 63 is provided over the front wheel 58a, and a rear fender 66 is provided over the rear wheel 58b. A rear combination lamp 18 is provided in a rear-end portion of the rear fender 66, and a headlamp 65a is placed in a front end of the front cowl 65. Further, an exhaust pipe 45 is placed under an engine 47a, and an exhaust gas is discharged from the exhaust pipe 45 through a silencer 69 which is provided in a right rear portion of the vehicle. Additionally, a stand 46 is turnably provided to lower portions of the respective pivot plates 57, and grab rails 19 to be grabbed by a passenger seated on a rear seat is provided in rear portions of the seat 40.

The power unit 47 has a decelerator 47b in the rear of the engine 47a. The decelerator 47b is an important power transmission component for decelerating a driving force generated by the engine 47a, and transmitting the decelerated driving force to the rear wheel 58b.
Incidentally, a rider keeps a riding posture by: seating himself/herself on the seat 40; resting his/her feet on the step floors 67, 67; and gripping the handlebar 49.

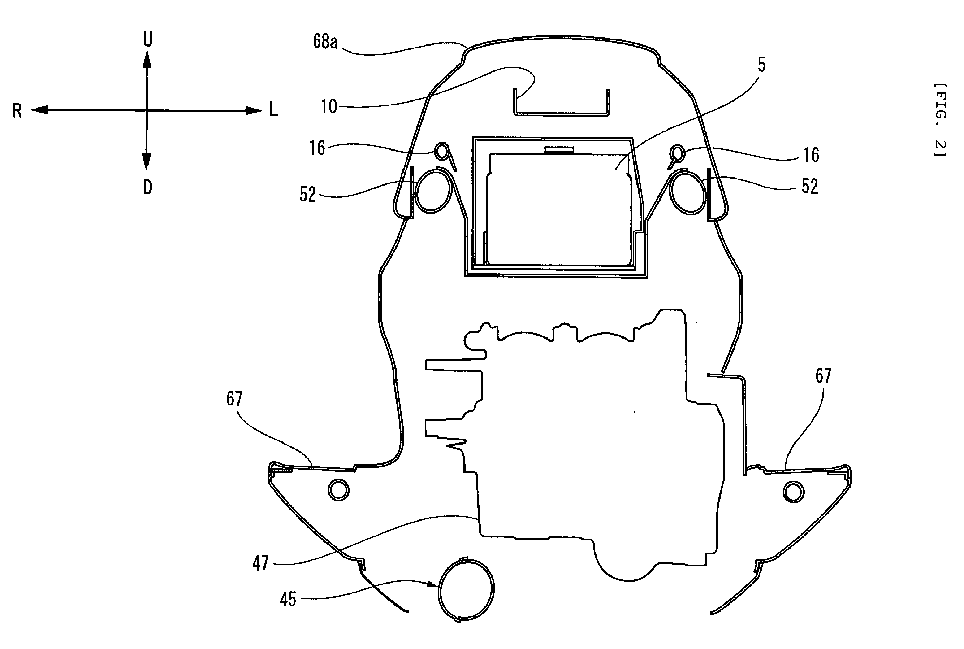

Fig. 2 is a diagram showing a floor tunnel portion 68a in the low-floor, saddle ride-type motorcycle 1 of the present invention, and is a schematic end face view of the floor tunnel 68a taken along the C-C line of Fig. 1, which is viewed from the front of the vehicle. Depending on the necessity, the power unit 47, a storage box 5, a seat-side hinge member 10 of a hinge mechanism 15 which will be described later, and the like are placed inside the floor tunnel portion 68a shown in Fig. 2, which is one of the cover members of the vehicle body. In addition, the step floors 67, 67 are provided at both of the left and right sides of the power unit 47.

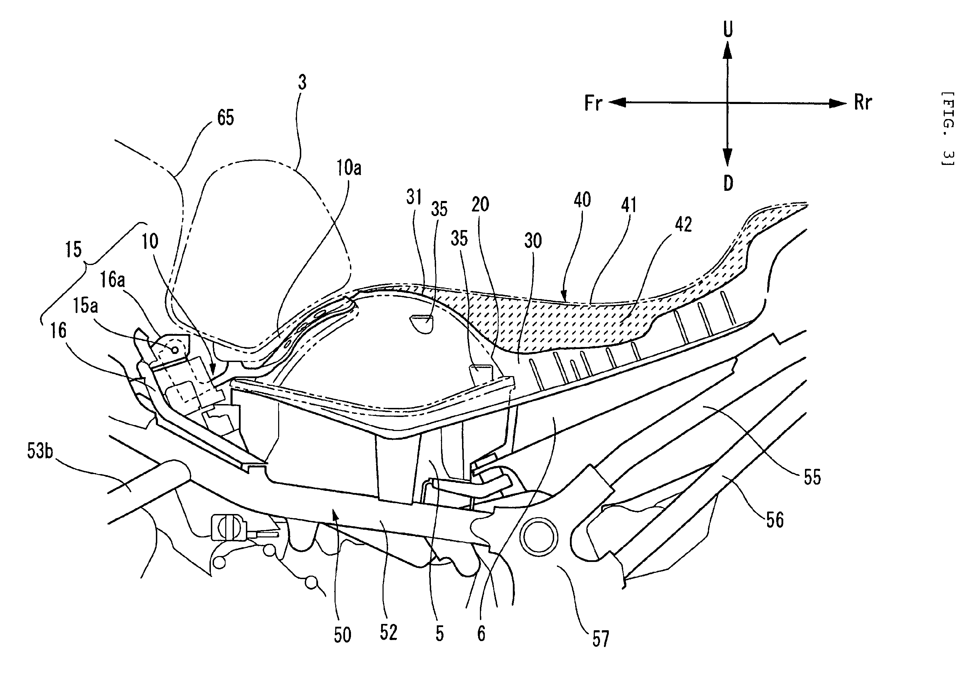

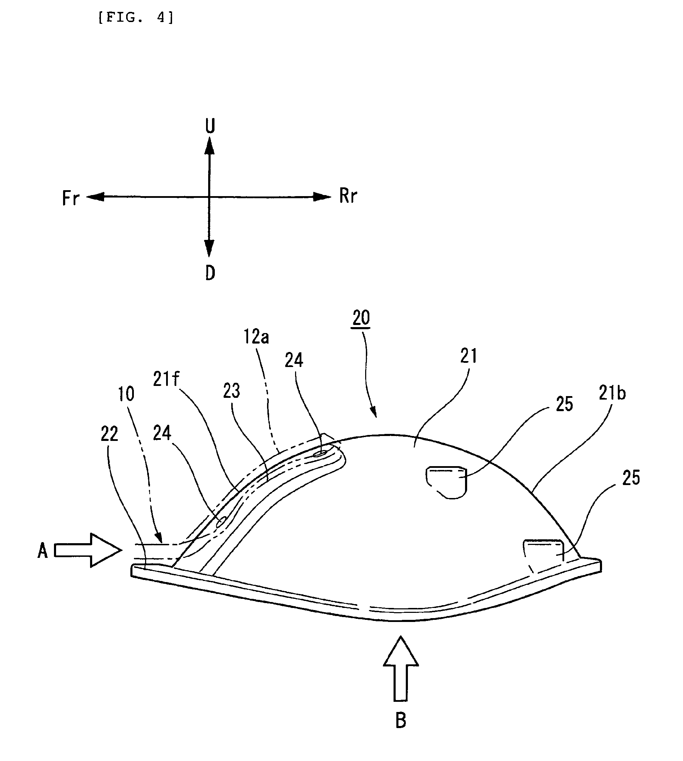

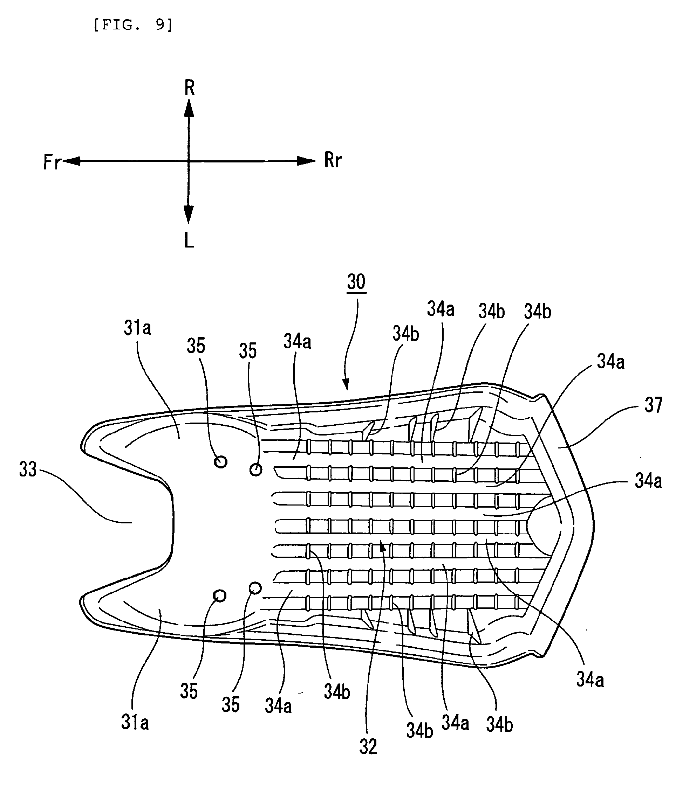

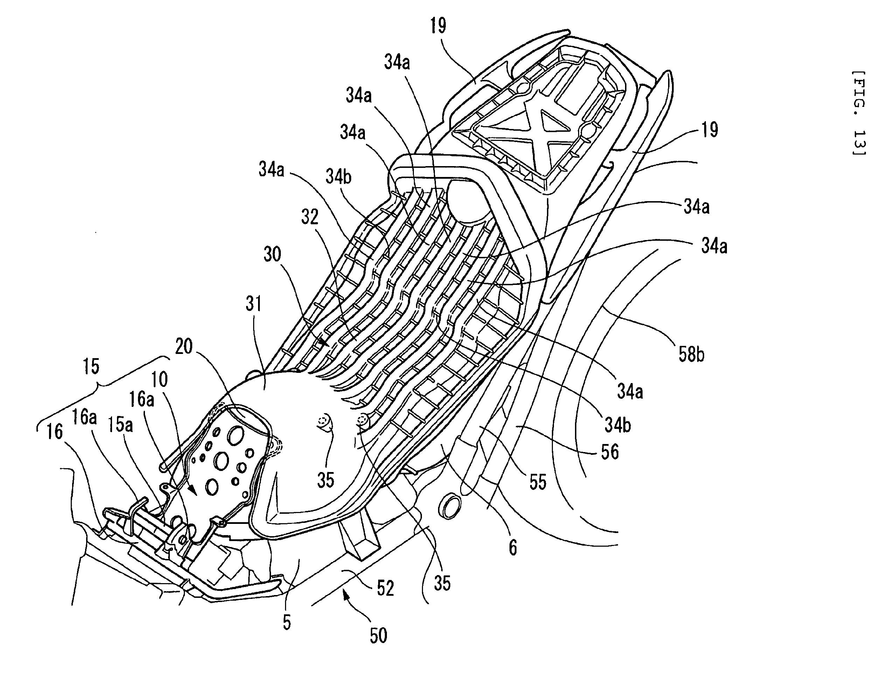

Referring to Figs. 3 to 16, descriptions will be provided for a structure of the seat and its periphery in the low-floor, saddle ride-type motorcycle 1 of the present invention.
In this embodiment, the seat 40 is connected to the main tubes 52 of the vehicle body frame 50 with assistance of the hinge mechanism 15. In other words, as shown in Figs. 3 and 13, the seat-side hinge member 10, which rotates integrally with the seat 40, in the hinge mechanism 15 is connected to a front portion 21f (see Fig. 4) of a lid member 20. In addition, a seat bottom plate 30 is connected to a rear portion 21b (see Fig. 4) of the lid member 20.

This hinge mechanism 15 is a metal member. The hinge mechanism 15 includes a hinge attachment frame 16 which is substantially in a U shape in a plan view, and which is attached to the left and right main tubes 52 in such a way that the hinge attachment frame 16 is laid between the left and right main tubes 52. The hinge mechanism 15 has a structure in which the seat-side hinge member 10 makes the seat 40 supported by attachment brackets 16a, which are vehicle front end-side portions of the hinge attachment frame 16, turnably about a rotary shaft 15a.

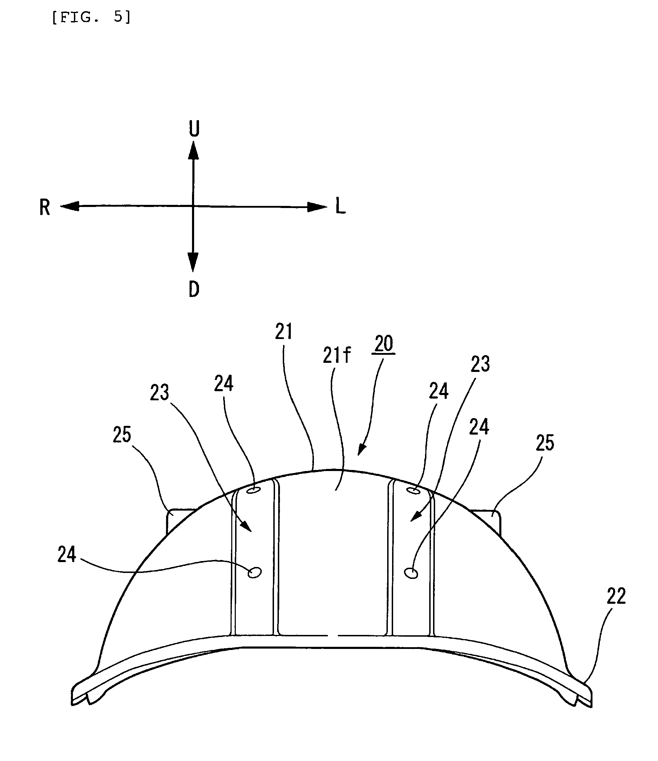

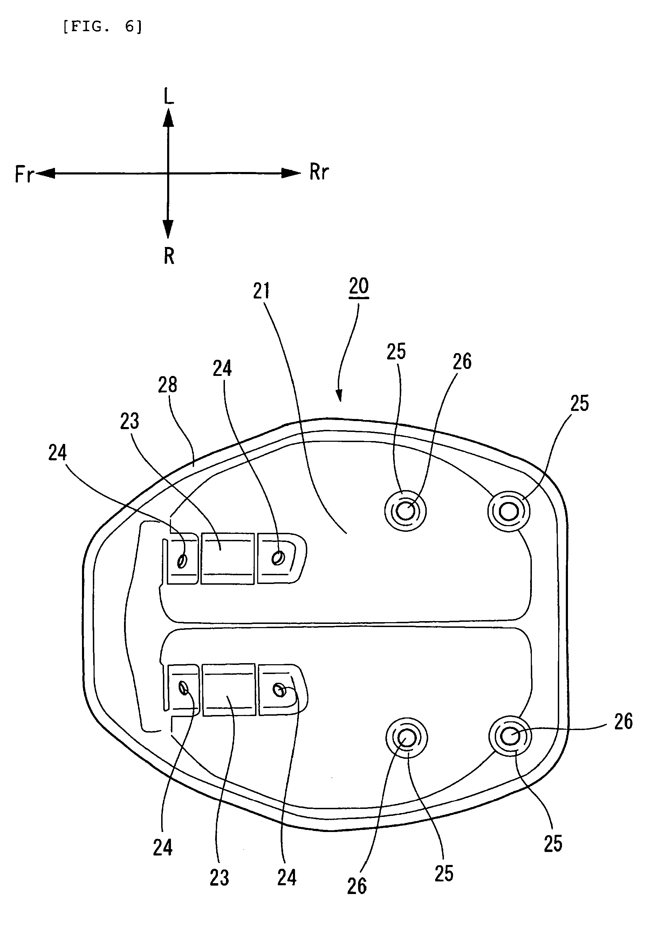

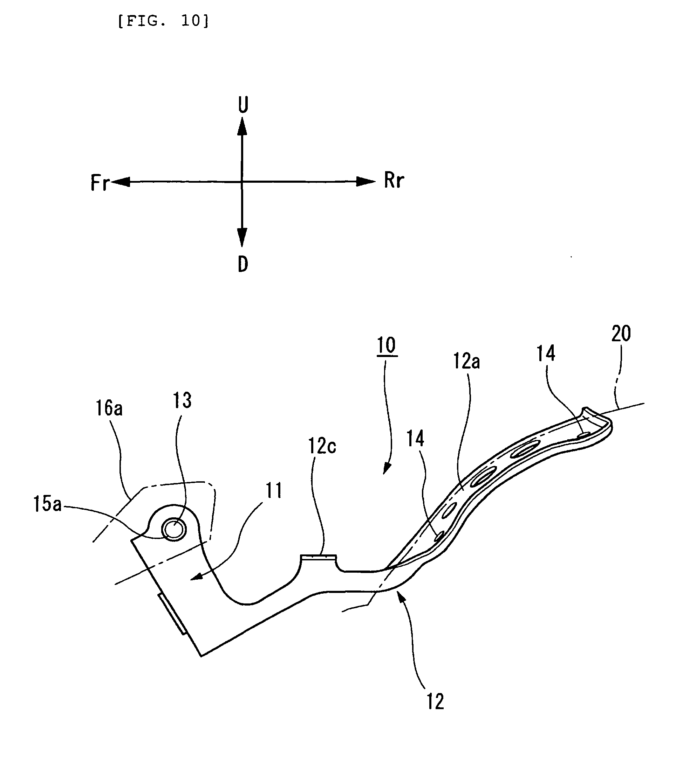

Descriptions will be provided for the seat-side hinge member 10 included in the hinge mechanism 15.
As shown in Figs. 10 to 12, the seat-side hinge member 10 of this embodiment includes: a connection base 11 having shaft holes 13 corresponding to the attachment brackets 16a, the rotary shaft 15a being inserted through the shaft holes 13; and a connection arm portion 12 bent at an angle of approximately 90° to the connection base 11, and extending from the connection base 11 toward the rear of the vehicle. In addition, the connection arm portion 12 has a curved portion 12a which includes screw holes 14 corresponding to screw holes 24 (see Figs. 5 and 6) of the lid member 20, which will be described later.
Incidentally, a damper bracket 11a to which a damper is attached is provided to the connection base 11. Paired left and right center cover bracket portions 12c which are provided between the connection base 11 and the curved portion 12a constitute attachment parts to which a below-described center cover 10a is attached.

Furthermore, the center cover 10a is attached over the seat-side hinge member 10, and the upper portions of the respective attachment brackets 16a are covered with the front cowl 65. A space over the center cover 10a behind the front cowl 65 is formed as a straddling portion 3 in front of the seat 40.

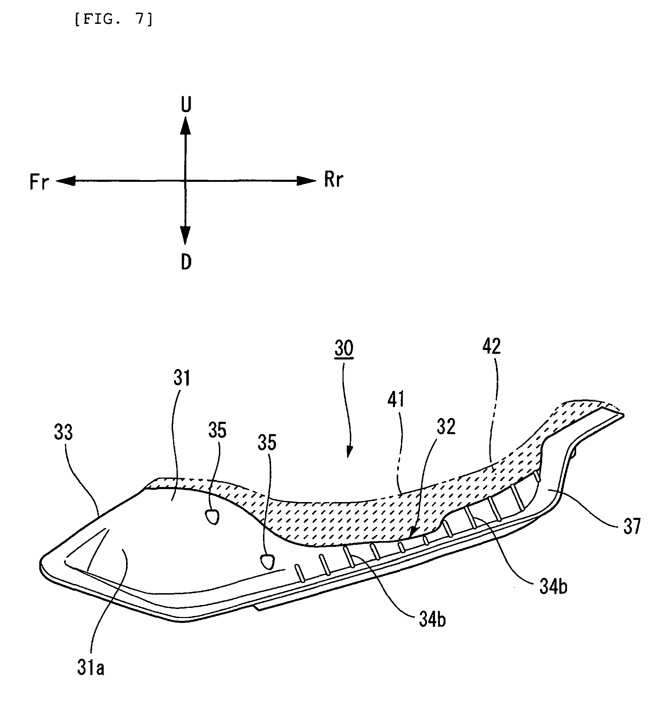

It should be noted that the storage box 5 and a fuel tank 6 (see Fig. 3) are provided under the seat 40.
Moreover, as shown in Figs. 3 and 7, the seat 40 has a constitution in which: a cushion material 42 is provided on the seat bottom plate 30 for maintaining the rigidity of the seat 40; and a seat skin 41 for covering the front surface of the cushion material 42 in such a way that the cushion material 42 is wrapped in the seat skin 41.
In this embodiment, as described above, the seat 40 is situated over the storage box 5. However, what actually corresponds to an opening portion 5a of the storage box 5 is the lid member 20 which is constituted as a body separated from the seat bottom plate 30. The lid member 20 is placed so as to cover the opening portion 5a.

Referring to Figs. 4 to 6, descriptions will be hereinbelow provided for the lid member 20 of this embodiment.
Fig. 4 is a side view showing a left side of the lid member 20 of this embodiment, which is placed in a direction in which the lid member 20 is attached to the vehicle. Fig. 5 is a front view of the lid member 20 which is viewed in an A direction of Fig. 4 (from the front of the vehicle). Fig. 6 is a bottom view of the lid member 20 which is viewed in a B direction of Fig. 4 (from under the vehicle). As learned from these drawings, the lid member 20 has a curved surface portion 21 whose overall shape is a hemisphere. The lid member 20 has a flange portion 22, which slightly projects outward, in the lowermost end of the curved surface portion 21.

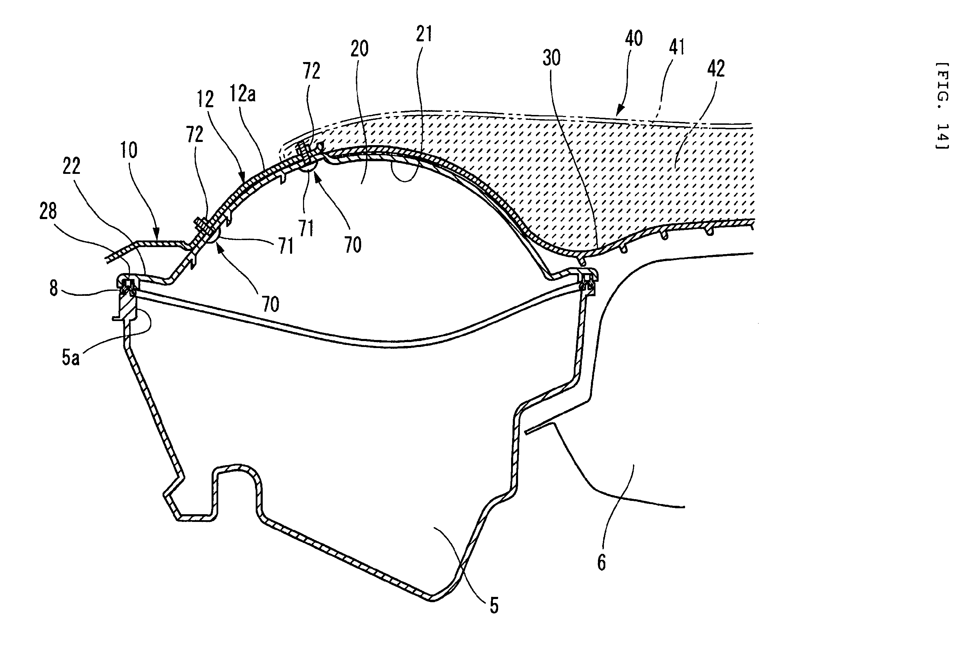

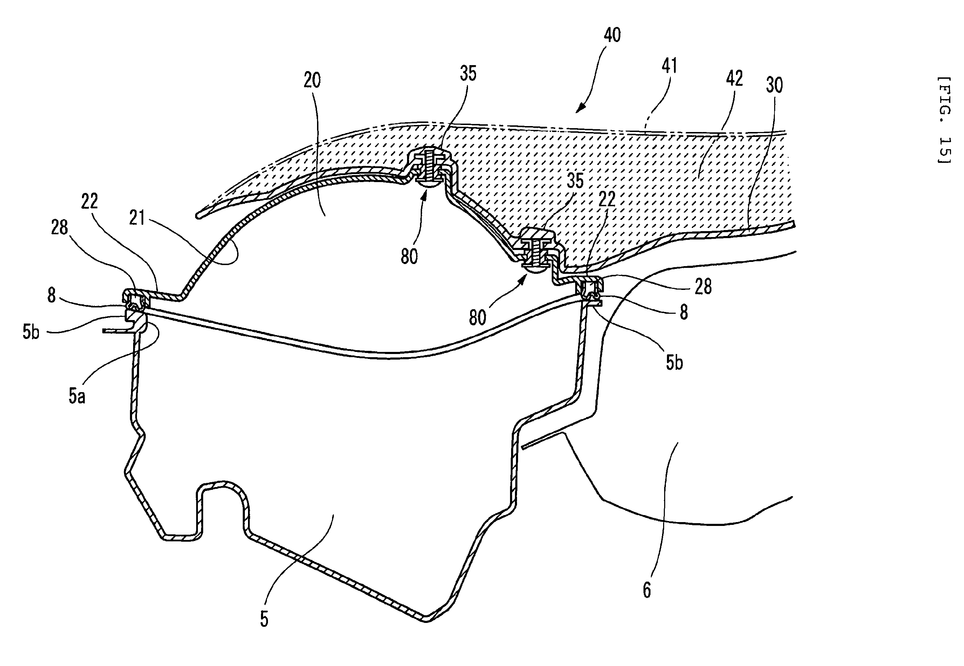

Furthermore, two projected rims 23 (see Figs. 5 and 6) are provided in a vehicle front-side portion of the lid member 20. Two screw holes 24 are formed in each of the projected rims 23. Attachment protrusions 25 having their respective attachment holes 26 (see Fig. 6) are provided in a vehicle rear-side portion of the lid member 20.
Incidentally, the lid member 20 may be formed from, for example, a synthetic resin as its material.
Moreover, a groove portion 28 (see Figs. 14 and 15) is formed in a lower portion of the flange portion 22, and makes a full circuit of the flange portion 22. Incidentally, although not illustrated in Figs. 4 to 6, a seal member 8 is provided to the groove portion 28. As shown in Fig. 15, the seal member 8 is attached to the groove portion 28 in such a way that the seal member overflows the groove portion 28 to a slight extent and that the seal member 8 is capable of altering its shape when the lid member 20 is closed.

Accordingly, when closing the storage box 5, the lid member 20 is capable of tightly shutting the storage box 5 by making the flange portion 22 correspond to an edge portion 5b of the storage box 5.
Incidentally, since the lid member 20 is formed substantially in a hemispherical shape, the lid member 20 has a structure which is strong enough to withstand a pressing force from above while the storage box 5 is closed. In addition, the storage box 5 can have a larger storage capacity, because the storage box 5 bulges hemispherically.

The lid member 20 not only is provided in such a way that the lid member 20 covers the entirety of the opening portion 5a of the storage box 5, but also includes the seal member 8 (see Figs. 14 and 15) which is brought into contact with the entire edge portion 5b of the opening portion 5a. The seal member 8 is formed from, for example, a rubber or an elastic synthetic resin. The cross-sectional shape of the seal member 8 is in a U shape, for example. Incidentally, the sealing tightness between the contact surface of the lid member 20 and the contact surface of the storage box 5 can be secured because the seal member 8 is attached to the groove portion 28 in such a way that part of the seal member 8 overflows the groove portion 28.

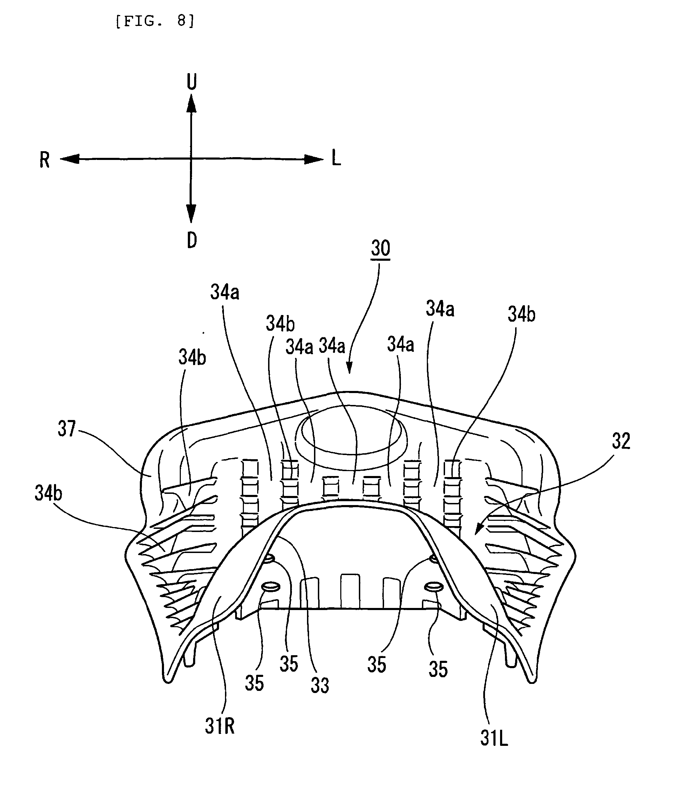

Referring mainly to Figs. 7 to 9 and 13, descriptions will be hereinbelow provided for the seat bottom plate 30 of this embodiment and its relevant structure.
As shown in Fig. 7, the seat 40 includes the seat bottom plate 30 having: a hemispherical surface portion 31, which is substantially in a hemispherical shape, in a vehicle front-side portion of the seat bottom plate 30; and a rib portion 32 which is a part of the seat bottom plate 30 slightly curved upward in the rear of the hemispherical surface portion 31. The seat bottom plate 30 is formed from a synthetic resin, and is relatively light in weight.
The hemispherical surface portion 31 has a structure in which the hemispherical surface portion 31 is provided with a curved-surface cut-away portion 33 (see Fig. 8) obtained by cutting away a vehicle front-side portion of the center portion of the hemispherical surface portion 31. In other words, front left and right portions 31L, 31R are formed in the left and right parts of the vehicle front-side portion of the hemispherical surface portion 31 by providing the curved-surface cut-away portion 33 there.

As described, the seat 40 does not have the seat bottom plate 30 in its portion opposed to the straddling portion 3 in exchange for the curved-surface cut-away portion 33. This makes it possible to enlarge the straddling portion 3. On the other hand, the cushion material 42 is provided over the front left and right portions 31L, 31R because of the existence of the front left and right portions. In other words, the seat 40 has a structure in which the cushion material 42 touches the inner sides of the two thighs of the rider when the rider rides on the vehicle.

Furthermore, the seat bottom plate 30 is formed in a smoothly curved surface at its portion where the hemispherical surface portion 31 overlaps the lid member 20 in a plan view. This means that, since the hemispherical surface portion of the seat bottom plate 30, which is situated close to the straddling portion 3, is formed in a smoothly curved surface, the seat bottom plate 30 has a structure in which the substantial thickness of its portion where the hemispherical surface portion 31 overlaps the lid member 20 becomes thinner.

Moreover, as shown in Figs. 7 and 8, the rib portion 32, which is situated closer to the rear of the vehicle than the lid member 20 is, has a rib structure which includes protrusions and depressions in a seat thickness direction. Additionally, the seat bottom plate 30 is designed to increase the overall rigidity of the seat through its curved structure in which its edge portion 37 is curved downward from the seat.
With regard to the above-mentioned rib structure, for example, multiple long longitudinal ribs 34a extending in the seat longitudinal direction are formed, and multiple lateral ribs 34b are formed between the longitudinal ribs 34a in such a way that the lateral ribs 34b connect between the longitudinal ribs 34a.

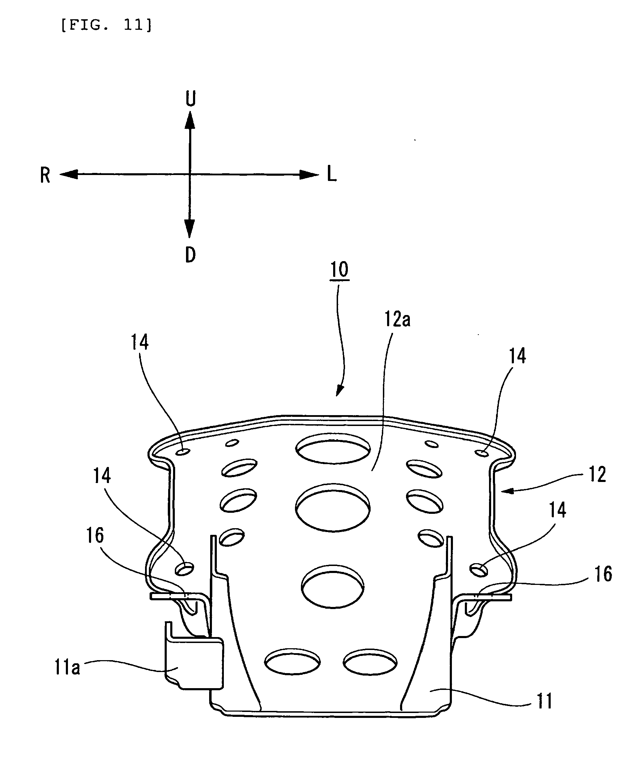

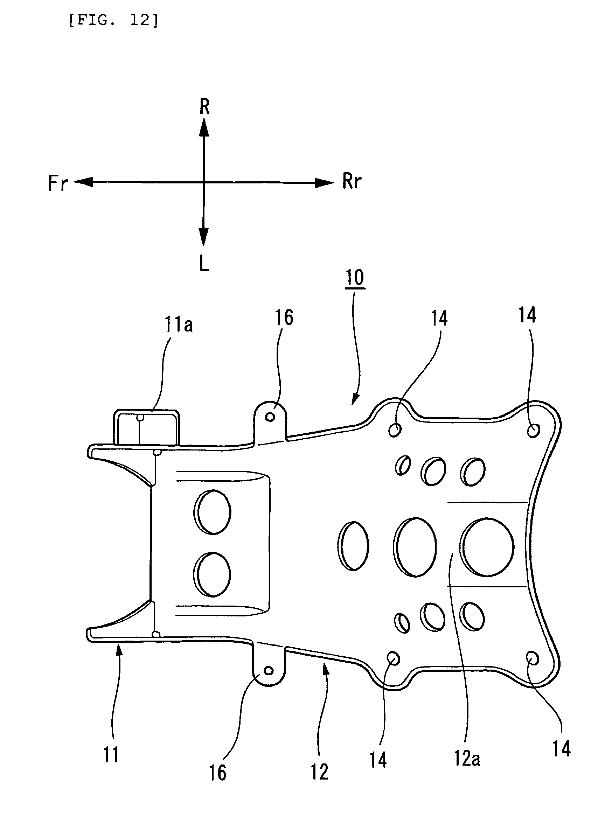

Descriptions will be hereinbelow provided for how the seat 40 of this embodiment is attached.
As shown in Fig. 14, the seat-side hinge member 10 of this embodiment is connected to the lid member 20 by use of fastening members 70. In other words, the fastening is achieved by screwing bolts 71 to nuts 72 with the bolts 71 penetrating the screw holes 14 (see Figs. 11 and 12) formed in the curved portion 12a of the connection arm portion 12 of the seat-side hinge member 10, and the screw holes 24 (see Figs. 5 and 6) in the lid member 20, respectively. This makes the lid member 20 securely supported by the seat-side hinge member 10.

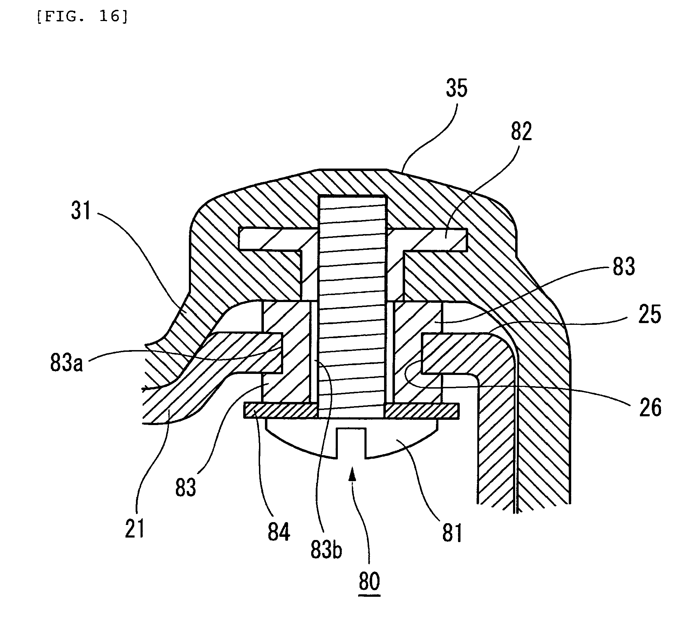

On the other hand, as shown in Fig. 15, the seat bottom plate 30 and the lid member 20 are connected together by use of elastic fastening members 80. In addition, as shown in Fig. 16 in a magnified manner, each set of elastic fastening members 80 includes: a male screw 81; a female screw portion 82 insert-formed in an attachment portion 35 of the seat bottom plate 30; an elastic portion 83; and a washer 84.

Further descriptions will be provided for the elastic fastening members 80 of this embodiment. The structure of the elastic fastening members 80 is as follows. As shown in Fig. 16, for example, the elastic portion 83, which is made of rubber or the like, is attached to the attachment hole 26 in the attachment protrusion 25 of the curved surface portion 21 of the lid member 20. The elastic portion 83 is formed substantially in a cylindrical shape having a penetration hole 83b in its center, and having an annular groove 83a in its outer periphery. The elastic portion 83 is attached to the attachment hole 26 with an edge portion of the attachment hole 26 fitted in the annular groove 83a.
In addition, from the inside of the curved surface portion 21, the male screw 81 is screwed into the elastic portion 83 with the washer 84 interposed in between. As a result, the lid member 20 and the seat bottom plate 30 are out of direct contact with each other, but are elastically fixed together with the elastic portion 83 interposed in between.

Descriptions will be provided for how a main part of the embodiment of the low-floor, saddle ride-type motorcycle 1 having the foregoing structure works.
In the embodiment, the seat 40 has lock means (not illustrated), which keeps the seat 40 closed, inside a rear portion of the seat 40. Accordingly, while the seat 40 is kept closed, the lid member 20 is in contact with the edge portion 5b of the storage box 5 with the seal member 8 squeezed by the lid member 20. In addition, the lid member 20 has a higher rigidity because the lid member 20 is formed with use of a member separated from the seat bottom plate 30, and is shaped like a hemisphere. Accordingly, the contact of the lid member 20 with the edge portion 5b is achieved surely, and the sealing quality of the storage box 5 is secured.

Furthermore, since the seat 40 is formed to lack a portion which would otherwise be opposed to the straddling portion 3, the straddle portion 3 can be enlarged while the seat is closed, and the cushion material 42 provided over the front left and right portions 31L, 31R touches the inner sides of the two thighs of the rider in the front portion of the seat 40 while the rider is riding on the vehicle. Accordingly, the seat 40 achieves good riding comfort.
Moreover, since, as described above, the elastic fastening members 80 are used in the rear portion behind the center portion of the seat 40 on which the rider is seated, vibrations from the vehicle body are inhibited from being transmitted to the rear portion while the rider is riding on the vehicle. Accordingly, good riding comfort is obtained.

On the other hand, descriptions will be provided for how the seat 40 operates when it opens and closes for the purpose of using the storage box 5.
First of all, the lock having kept the seat 40 closed is released, and the seat 40 is operated so as to open upward from the vehicle body. Thereby, the seat 40, as a whole, turns about the rotary shaft 15a of the hinge mechanism 15.

During this seat opening motion, the opening operation is performed with the rigidity secured for the seat rotation because: the lid member 20 is securely supported to the vehicle frame 50 by the seat-side hinge member 10; and the seat bottom plate 30 is connected to the lid member 20 in such a way that the seat bottom plate 30 overlap and cover the lid member 20. The seat opening operation can be achieved easily in a satisfactory condition. Furthermore, the seat is kept open while held as necessary by the damper connected to the seat-side hinge member 10.

On the other hand, a closing operation for closing the seat 40 is carried out by: operating the seat 40 in such a manner as to push the seat 40 toward the rear of the vehicle against the biasing force of the damper which has kept the seat 40 open; thus closing the seat 40; and subsequently locking the seat 40.
This seat closing operation can be achieved in a satisfactory condition, too, because the rigidity is secured for the seat's turn.

The foregoing descriptions have been provided for the embodiment of the present invention. Nevertheless, for example, the shape of the hinge mechanism 15, the seat-side hinge member 10, the lid member 20, the seat bottom plate 30 or the like is not limited to that described in the embodiment. Their shapes may be modified whenever deemed necessary.
Furthermore, the foregoing embodiment has been described as including the rubber, as the elastic member, used for the elastic portion 83 of each elastic fastening member 80. However, the elastic member is not limited to the rubber. A coil spring or the like may be used as the elastic member.
Moreover, the foregoing embodiment has been described as having the fixing structure in which the seat-side hinge member 10 and the lid member 20 are fixed together with the fastening members 70 using the bolts. However, the fixing structure is not limited to this case. A fixing structure using members such as rivets may be used.
- 1: low-floor, saddle ride-type motorcycle (saddle ride-type vehicle)
- 3: straddling portion
- 5: storage box
- 6: fuel tank
- 10: seat-side hinge member
- 15: hinge mechanism
- 20: lid member
- 30: seat bottom plate
- 40: seat
- 41: seat skin
- 42: cushion material
- 50: vehicle body frame
- 67: step floor
- 68a: floor tunnel portion
- 70: fastening member
- 80: elastic fastening member

## Claims

1. A saddle ride-type vehicle (1) including:
a vehicle body frame (50);
a seat (40) having a seat skin (41), a cushion material (42) and a seat bottom plate (30);
a storage box (5) situated under the seat (40);
a hinge mechanism (15) for pivotally supporting the seat (40) turnably with respect to the vehicle body frame (50);
a step floor (67) on which a rider rests his feet, respectively; and
a floor tunnel portion (68a) placed in an area in front of and lower than the seat (40), a straddling portion (3) being formed in an area over the floor tunnel portion (68a) and in front of the seat (40),
the saddle ride-type vehicle (1) wherein
a lid member (20) is provided over the storage box (5), the lid member (20) being a body separated from the seat bottom plate (30),
a seat-side hinge member (10) is connected to a front portion (21f) of the lid member (20), the seat-side hinge member (10) being configured to turn about a rotary shaft (15a) of the hinge mechanism (15), and
the seat bottom plate (30) is connected to a rear portion (21b) of the lid member (20),
**characterized in that**
the lid member (20) covers the entirety of an opening portion (5a) of the storage box (5), and includes a seal member (8) being adapted to be brought into contact with a full circumference of an edge portion (5b) of the opening portion (5a).

2. The saddle ride-type vehicle (1) according to claim 1, wherein the lid member (20) is formed substantially in such a hemispherical shape as to bulge upward from a vehicle body and cover the storage box (5).

3. The saddle ride-type vehicle (1) according to claim 1 or 2, wherein
a hemispherical surface portion (31), which is substantially in a hemispherical shape, is provided in a vehicle front-side portion of the seat bottom plate (30), and
front left and right portions (31L, 31R) are formed by providing a curved-surface cut-away portion (33) in the hemispherical surface portion (31), the curved-surface cut-away portion (33) being obtained by cutting away a vehicle front-side center portion from the hemispherical surface portion (31).

4. The saddle ride-type vehicle (1) according to claim 3, wherein, in the seat bottom plate (30),
its portion where the hemispherical surface portion (31) overlaps the lid member (20) in a plan view is formed using a smoothly curved surface, and
its rear portion, which is situated closer to a rear of the vehicle than the lid member (20) is, includes a rib portion (32) having protrusions and depressions in a thickness direction of the rear portion.

5. The saddle ride-type vehicle (1) as described in any one of claims 1 to 4, wherein
the seat-side hinge member (10) and the lid member (20) are directly connected together by use of a fastening member (70), and
the seat bottom plate (30) and the lid member (20) are elastically connected together by use of an elastic fastening member (80).

## Patentansprüche

1. Fahrzeug (1) vom Sattelfahrtyp umfassend:
einen Fahrzeugrahmen (50);
einen Sitz (40), der einen Sitzbezug (41), ein Polstermaterial (42) und eine Sitzgrundplatte (30) hat;
ein Aufbewahrungsbehältnis (5), das unter dem Sitz (40) gelegen ist;
einen Scharniermechanismus (50) zum drehbaren Tragen des Sitzes (40), drehbar relativ zu dem Fahrzeugrahmen (50);
ein Auftrittboden (67), auf dem ein Fahrer seine Füße jeweils auflegt; und
einen Bodentunnelabschnitt (68a), der in einem Bereich vor und unterhalb des Sitzes (40) angeordnet ist,
einen Grätschabschnitt (3), der in einem Bereich oberhalb des Bodentunnelabschnitts (68a) und vor dem Sitz (40) angeordnet ist,
das Fahrzeug vom Satteltyp, wobei ein Deckelelement (20) vorgesehen, das über dem Aufbewahrungsbehältnis (5), wobei das Deckelelement (20) ein Körper ist, der getrennt von der Sitzgrundplatte (30) ist,
ein sitzseitiges Scharnierelement (10), das mit einem vorderen Abschnitt (21f) des Deckelelements (20) verbunden ist, wobei das sitzseitige Scharnierelement (10) eingerichtet ist um eine Drehachse (15a) des Scharniermechanismus (15) zu drehen, und
die Sitzgrundplatte (30) mit einem hinteren Abschnitt (21b) des Deckelelements (20) verbunden ist,
**dadurch gekennzeichnet, dass**
das Deckelelement (20) die Gesamtheit eines Öffnungsabschnitts (5a) des Aufbewahrungsbehältnisses (5) abdeckt und ein Dichtelement (8) umfasst, das eingerichtet ist um in Kontakt mit einem vollständigen Umfang eines Randabschnitts (5b) des Öffnungsabschnitts (5a) gebracht zu werden.

2. Fahrzeug (1) vom Sattelfahrtyp, wobei das Deckelelement (20) im Wesentlichen in einer solch halbkugelförmigen Form gebildet ist, um sich nach oben von dem Fahrzeugrahmen wölben und das Aufbewahrungsbehältnis (5) abzudecken.

3. Fahrzeug (1) vom Sattelfahrtyp gemäß Anspruch 1 oder 2, wobei
ein halbkugelförmiger Oberflächenabschnitt (31), der im Wesentlichen eine halbkugelförmige Form hat, in einem in Fahrzeugrichtung vorderen, seitlichen Abschnitt der Sitzgrundplatte (30) angeordnet ist, und
vordere, linke und rechte Abschnitte (31l, 31r) durch Vorsehen eines gekrümmten ausgeschnittenen Abschnitts einer Oberfläche in dem halbkugelförmigen Oberflächenabschnitt (31) gebildet sind, wobei der ausgeschnittene Abschnitt (33) der gekrümmten Oberfläche durch Ausschneiden eines bezüglich des Fahrzeugs vorderen seitlichen Mittelabschnitts des halbkugelförmigen Oberflächenabschnitts (31) erhalten wird.

4. Fahrzeug (1) vom Sattelfahrtyp gemäß Anspruch 3, wobei der halbkugelförmige Oberflächenabschnitt (31) der Sitzgrundplatte (30) das Deckelelement (20) in einer Draufsicht überlappt, durch Verwenden einer gleichmäßig gekrümmten Oberfläche gebildet ist und
dessen hinterer Abschnitt, der näher an der Rückseite des Fahrzeugs gelegen ist als das Deckelelement (20), einen Rippenabschnitt (32) aufweist, der Vorsprünge und Vertiefungen in einer Dickenrichtung des hinteren Abschnitts hat.

5. Fahrzeug (1) vom Sattelfahrtyp wie in einem der Ansprüche 1- 4 beschrieben, wobei
das sitzseitige Scharnierelement (10) und das Deckelelement (20) durch Verwendung eines Befestigungselements (70) direkt miteinander verbunden sind und
die Sitzgrundplatte (30) und das Deckelelement (20) durch Verwendung eines elastischen Befestigungselements (80) elastisch miteinander verbunden sind.

## Revendications

1. Véhicule de type à selle (1) comprenant :
un châssis de carrosserie de véhicule (50) ;
une selle (40) ayant un revêtement de selle (41), un matériau de coussin (42) et une plaque d'embase de selle (30) ;
un logement de rangement (5) situé au-dessous de la selle (40) ;
un mécanisme de charnière (15) pour supporter de manière pivotante la selle (40) pouvant tourner par rapport au châssis de carrosserie de véhicule (50) ;
des cale-pieds (67) sur lesquels un pilote met respectivement ses pieds ; et
une portion de tunnel de plancher (68a) placée dans une zone devant et au-dessous de la selle (40), une portion à enjamber (3) étant formée dans une zone au-dessus de la portion de tunnel de plancher (68a) et devant la selle (40),
dans lequel
un organe de recouvrement (20) est fourni sur le logement de rangement (5), l'organe de recouvrement (20) étant un corps distinct de la plaque d'embase de selle (30),
un organe de charnière de côté de selle (10) est relié à une portion avant (21f) de l'organe de recouvrement (20), l'organe de charnière de côté de selle (10) étant configuré pour tourner autour d'un arbre rotatif (15a) du mécanisme de charnière (15), et
la plaque d'embase de selle (30) est reliée à une portion arrière (21b) de l'organe de recouvrement (20),
**caractérisé en ce que**
l'organe de recouvrement (20) recouvre l'intégralité d'une portion d'ouverture (5a) du logement de rangement (5), et comprend un organe d'étanchéité (8) apte à être mis en contact avec une circonférence complète d'une portion de bord (5b) de la portion d'ouverture (5a).

2. Véhicule de type à selle (1) selon la revendication 1, dans lequel l'organe de recouvrement (20) a une forme sensiblement hémisphérique faisant saillie vers le haut à partir d'une carrosserie de véhicule et recouvre le logement de rangement (5).

3. Véhicule de type à selle (1) selon la revendication 1 ou 2, dans lequel
une portion de surface hémisphérique (31) de forme sensiblement hémisphérique est fournie dans une portion de côté avant de véhicule de la plaque d'embase de selle (30), et
des portions avant gauche et droite (31L, 31R) sont formées en fournissant une portion découpée de surface incurvée (33) dans la portion de surface hémisphérique (31), la portion découpée de surface incurvée (33) étant obtenue en découpant une portion centrale de côté avant de véhicule à partir de la portion de surface hémisphérique (31).

4. Véhicule de type à selle (1) selon la revendication 3, dans lequel, dans la plaque d'embase de selle (30),
sa portion où la portion de surface hémisphérique (31) chevauche l'organe de recouvrement (20) dans une vue en plan est formée en utilisant une surface incurvée lisse, et
sa portion arrière, qui est située plus près d'un arrière du véhicule que l'organe de recouvrement (20), comprend une portion de nervures (32) comportant des protubérances et des dépressions dans une direction d'épaisseur de la portion arrière.

5. Véhicule de type à selle (1) selon l'une quelconque des revendications 1 à 4, dans lequel
l'organe de charnière de côté de selle (10) et l'organe de recouvrement (20) sont directement reliés l'un à l'autre en utilisant un organe de fixation (70), et
la plaque d'embase de selle (30) et l'organe de recouvrement (20) sont reliés élastiquement l'un à l'autre en utilisant un organe de fixation élastique (80).
